# EUROPÄISCHE PATENTANMELDUNG

(11) **EP 0 995 714 A1**
(43) Veröffentlichungstag der Anmeldung: **26.04.2000**
(21) Anmeldenummer: 99120649.1
(22) Anmeldetag: 19.10.1999
(51) Int. Cl.: B66F 7/02, B66F 7/14, F16H 25/24, F16B 37/08

(54) **Sicherheitseinrichtung für einen linearen Gewindetrieb**

(30) Priorität: 23.10.1998 DE 19848974
(71) Anmelder: Alltec GmbH, 71111 Waldenbuch (DE)
(72) Erfinder: Kittelberger, Rainer, 72135 Dettenhausen (DE)
(74) Vertreter: Patentanwälte Ruff, Beier, Schöndorf und Mütschele

(57) **Zusammenfassung**

Eine Sicherheitseinrichtung für einen linearen Gewindetrieb, insbesondere ein Spindelhubgetriebe, hat eine mit einer zu tragenden Last verbindbaren Arbeitsmutter (3), die verdrehgesichert auf einer Spindel (2) des Gewindetriebes geführt ist, und eine mit der Arbeitsmutter zusammenwirkende, im Normalbetrieb unbelastet mit dieser mitlaufende Sicherheitsmutter (6), die relativ zur Arbeitsmutter axial beweglich ist und gegenüber dieser verdrehgesichert sein kann. Die Arbeitsmutter und die Sicherheitsmutter bilden eine radialsymmetrisch wirkende Bremseinrichtung für die Spindel, indem bei Verschleiß oder Bruch des Arbeitsmuttergewindes an der Sicherheitsmutter (6) vorgesehene Bremszungen (20) durch einen konischen Innenabschnitt (10) der Arbeitsmutter radial nach innen in Klemmeingriff mit der Spindel gepreßt werden, und dadurch den Gewindetrieb ggf. bis zum Stillstand abbremsen.

## Beschreibung

Die Erfindung betrifft eine Sicherheitseinrichtung für einen linearen Gewindetrieb, insbesondere ein Spindelhubgetriebe, nach dem Oberbegriff von Anspruch 1.

Spindelbetriebene lineare Gewindetriebe werden vorwiegend zum linearen Vorschub von Lasten eingesetzt, insbesondere zum Heben von Lasten. Sie haben mindestens eine zur Verbindung mit einer zu verschiebenden, insbesondere zu hebenden Last vorgesehene Arbeitsmutter oder Lastmutter, die zum Zusammenwirken mit einer motorisch oder manuell antreibbaren Spindel des Gewindetriebes ausgebildet und verdrehsicher entlang der Spindel geführt ist. Die Arbeitsmutter ist bei Gewindetrieben ein Verschleißteil, so daß damit gerechnet werden muß, daß nach einer bestimmten Betriebszeit, insbesondere abhängig von den im Betrieb auftretenden Belastungen, Gewindegänge abgenutzt sind. Wenn die Abnutzung so weit voranschreitet, daß kein Kraftschluß mehr zwischen Spindel und Arbeitsmutter besteht, kann bei Hebeeinrichtungen die Last abstürzen oder es können andere Transportaufgaben nicht mehr oder nur noch unpräzise, erschwert und/oder sonstwie unzureichend durchgeführt werden. Es ist daher üblich, Sicherheitseinrichtungen einzusetzen, mit deren Hilfe der Verschleiß kontrolliert werden kann und die es normalerweise auch ermöglichen, bei Verschleiß oder Bruch der Arbeitsmutter die Last weiterzutragen.

Eine bewährte Art von Sicherheitseinrichtungen arbeitet mit mindestens einer mit der Arbeitsmutter zusammenwirkenden Sicherheitsmutter, die zum zwangsläufigen Mitlaufen auf der Spindel vorgesehen ist und die im Normalbetrieb unbelastet mitläuft und damit praktisch keinem Verschleiß unterliegt. Die manchmal auch als Fangmutter bezeichnete Sicherheitsmutter ist bei gattungsgemäßen Sicherheitseinrichtungen relativ zur Arbeitsmutter beweglich. Bei Gewindebruch oder - verschleiß o. dgl. bewegen sich Sicherheitsmutter und Arbeitsmutter relativ zueinander. Die Relativbewegung wird für Sicherungszwecke genutzt.

Es ist schon eine derartige Sicherheitseinrichtung vorgeschlagen worden, bei der die Sicherheitsmutter mit axialem Abstand unterhalb der Arbeitsmutter, gegenüber der Arbeitsmutter verdrehgesichert, mitläuft. Eine den Abstand überbrükkende Lasche aus biegsamem Material verbindet die Muttern. Mit zunehmender Abnutzung der Laufmutter verringert sich der Abstand zwischen den beiden Muttern, so daß die Lasche axial gestaucht wird und sich radial ausbaucht. Die radiale Ausbauchung wirkt als Betätigungselement für einen Endschalter, der bei entsprechendem Verschleiß die Hebeeinrichtung abschaltet, so daß die Arbeitsmutter ausgetauscht werden kann. Bei einer leicht möglichen Überbrückung des elektrischen Endschalters oder bei dessen Ausfall ist die Sicherheitseinrichtung wirkungslos. Diese Nachteile ergeben sich bei allen mit elektrischen Endschaltern arbeitenden Sicherungen.

Es sind auch schon mechanisch arbeitende Sicherheitseinrichtungen vorgeschlagen worden. Bei einer aus der DE 29 06 172 bekannten Einrichtung sind Arbeitsmutter und Fangmutter in axialem Abstand zueinander angeordnet und die an beiden axialen Enden mit Rollenlagern versehene Fangmutter ist relativ zur Arbeitsmutter verdrehbar. In einem Abstand unterhalb der Sicherheitsmutter ist eine auf der Spindel zwangsläufig mitlaufende Kontermutter angeordnet. Wenn die Arbeitsmutter verschleißbedingt auf die Fangmutter aufsetzt, verdreht sich die Fangmutter und kommt zur Anlage mit der Kontermutter. Durch die Konterwirkung wird ein weiteres Anheben der Hebeeinrichtung ruckartig blockiert. Die Einrichtung ist aufwendig aufgebaut. Eine ruckartige Blockierung der Hebeeinrichtung belastet die tragenden Teile stark. Diese müssen daher entsprechend stark ausgelegt sein.

Der Erfindung liegt die Aufgabe zugrunde, eine Sicherheitseinrichtung der genannten Art vorzuschlagen, die die Nachteile des Standes der Technik vermeidet und die insbesondere einen einfachen Aufbau ermöglicht.

Zur Lösung dieser Aufgabe schlägt die Erfindung eine Sicherheitseinrichtung mit den Merkmalen von Anspruch 1 vor.

Eine erfindungsgemäße Sicherheitseinrichtung zeichnet sich dadurch aus, daß die Arbeitsmutter und die Sicherheitsmutter derart gekoppelt sind, daß sie eine durch die Relativbewegung von Arbeitsmutter und Sicherheitsmutter betätigbare, mechanische Bremseinrichtung für die Spindel bilden. Die durch die vorzugsweise axiale Relativbewegung erzeugte Bremswirkung kann den Lastwiderstand des Gewindetriebes in einer durch die Auslegung der Bremseinrichtung festlegbaren, definierten Weise verschleißabhängig, vorzugsweise kontinuierlich, erhöhen, ohne daß es zu einer die Teile des Gewindetriebes belastenden ggf. ruckartigen Blockierung des Gewindetriebes kommen muß. Vielmehr machen sich die beispielsweise verschleißbedingten Störungen des Zusammenwirkens von Spindel und Arbeitsmutter in einem durch die Bremseinrichtung geeignet verstärkten Ausmaß als deutliche Verschlechterung des Wirkungsgrades des Gewindetriebes bemerkbar. Entsprechend kann die Bremseinrichtung für das Zusammenwirken mit einer Kontrolleinrichtung für den Wirkungsgrad des Gewindetriebes ausgelegt sein. Insbesondere können durch Überwachung des Leistungsbedarfes eines vorzugsweise elektrischen Antriebsmotors für die Spindel sich ankündigende Probleme im Zusammenwirken von Arbeitsmutter und Spindel frühzeitig erkannt und berücksichtigt werden. Beispielsweise kann eine Überlastsicherung, etwa in Form eines Überhitzungsschutzes des Antriebsmotors, eine Abschaltung des Motors bewirken. Insbesondere ist es möglich, daß die Steuerung derart ausgelegt ist, daß bei einem Spindelhubgetriebe nur noch ein Absetzen der Last möglich ist, wenn eine Leistungsaufnahmegrenze des Antriebs erreicht ist und daß ein Wiederanfahren bzw. ein erneutes Anheben der Last verhindert wird. Je nach Auslegung der Bremseinrichtung ist es auch möglich, daß der Gewindetrieb durch die Bremseinrichtung im wesentlichen kontinuierlich unter Vermeidung einer ruckartigen Blockierung bis zu einem Stillstand abgebremst wird.

Besonders wirksame Sicherheitseinrichtungen lassen sich aufbauen, wenn die Bremseinrichtung als Radial-Bremseinrichtung ausgebildet wird, also als Bremseinrichtung, bei der die Bremswirkung durch radiale Verschiebung von Bremselementen bewirkt wird, die durch die Verschiebung mit entsprechendem Anpreßdruck, insbesondere unter Erzeugung von Gleitreibung, an axial unbewegliche Gegenelemente gedrückt werden. Der Bremseingriff erfolgt vorzugsweise radialsymmetrisch, so daß auf die Sicherheitseinrichtung oder die Spindel wirkende Kippmomente während des Bremsvorganges vermieden werden können. Eine über Gleitreibung wirkende Bremseinrichtung kann als Klemmeinrichtung ausgebildet sein, die besonders vorteilhaft eine kontinuierliche Steigerung der Bremskraft ermöglicht. Alternativ oder zusätzlich können auch Bremselemente vorgesehen sein, die durch formschlüssigen Angriff oder Eingriff in Gegenelemente eine Bremswirkung herbeiführen.

Bei einer bevorzugten Ausführungsform hat die Sicherheitseinrichtung, insbesondere die Sicherheitsmutter, mindestens ein, vorzugsweise mehrere, vorzugsweise symmetrisch, um den Umfang der Sicherheitseinrichtung verteilte, durch die insbesondere axiale Relativbewegung von Arbeitsmutter und Sicherheitsmutter mindestens abschnittsweise radial bewegbare Bremselemente. Diese können vorzugsweise selbsttätig rückstellend sein, so daß eine der Betätigungsrichtung entgegengerichtete Relativbewegung von Arbeitsmutter und Sicherheitsmutter automatisch zur Lösung des Bremseingriffes führt, ohne daß eine gesonderte Kopplung für die Rückholung der Bremselemente vorgesehen sein muß.

Die Bremselemente können gesonderte Teile sein, die an der Arbeitsmutter und/oder an der Sicherheitsmutter, insbesondere aber nur an der Sicherheitsmutter, beweglich, beispielsweise schwenkbar befestigt sein können. Eine besonders einfach aufgebaute Ausführung läßt sich erreichen, wenn die Bremselemente einstückig mit der Sicherheitsmutter ausgebildet sind. Bei einer bevorzugten Ausführungsform sind die Bremselemente durch axiale Bremszungen der Sicherheitsmutter gebildet, die in Umfangsrichtung durch nicht auf voller axialer Länge der Sicherheitsmutter durchgehende Längsschlitze getrennt sind und mit ihren freien Endbereichen nach innen gebogen oder nach außen gedrückt werden können. Entsprechend kann sich der durch die Bremselemente begrenzte wirksame Innendurchmesser der Sicherheitsmutter verringern und/oder der wirksame Außendurchmesser der Sicherheitsmutter im Bereich der Bremselemente erhöhen, so daß der Innendurchmesser und/oder der Außendurchmesser der Sicherheitsmutter zumindest in einem Axialabschnitt, vorzugsweise kontinuierlich, veränderbar ist.

Bei bevorzugten Ausführungsformen ist die den Bremseingriff bewirkende Relativbewegung zwischen Arbeitsmutter und Sicherheitsmutter eine axiale Verschiebung, die geeignet in eine Radialbewegung der Bremselemente umgewandelt wird. Dabei kann es so sein, daß die Sicherheitsmutter verdrehgesichert geführt, insbesondere drehtest mit der Arbeitsmutter gekoppelt ist, sich also bei der axialen Relativverschiebung nicht dreht.

Es ist auch möglich, daß die Sicherheitsmutter relativ zu der Arbeitsmutter, vorzugsweise winkelbegrenzt, verdrehbar und derart mit dieser gekoppelt ist, daß die Drehbewegung mit einer axialen Relativverschiebung einhergeht. Beispielsweise können Sicherheitsmutter und Arbeitsmutter ineinandergreifende Gewinde oder Führungselemente z.B. nach Art von Führungsnuten und Vorsprüngen haben, mittels Kurvenführung und Mitnehmern gekoppelt sein oder durch in Umfangsrichtung beabstandete, gelenkig an Arbeismutter und Sicherheitsmutter angebrachte Koppelelemente verbunden sein.

Eine besonders einfache und wirksame Umwandlung einer axialen Relativverschiebung in eine Radialbewegung der Bremselemente läßt sich dadurch erreichen, daß eine der Muttern eine axial verlaufende, vorzugsweise konische Keilfläche hat, die mit einer Gegenfläche der anderen Mutter derart zusammenwirkt, daß eine axiale Relativverschiebung der Muttern eine Radialverschiebung von Bremselementen bewirkt. Alternativ oder zusätzlich können auch Kniehebel oder andere geeignete Einrichtungen eingesetzt werden, die eine axiale Relativbewegung in eine Radialbewegung umsetzen.

Eine Radial-Bremseinrichtung kann durch radiales Aufspreizen von Bremselementen und/oder durch radiales Zusammendrücken von Bremselementen die Bremswirkung erzeugen. Eine besonders einfach aufgebaute Ausführungsform zeichnet sich dadurch aus, daß die Bremselemente nach radial innen bewegbar und zum einklemmenden Bremseingriff mit der Spindel ausgebildet sind. Sie können bei dieser im wesentlichen ausschließlich an radialen Außenflächen angreifen. Eine besonders starke Bremswirkung ergibt sich, wenn ein Bremselement einen Innengewindeabschnitt hat, dessen Gewindegänge in das Außengewinde der Spindel eindrückbar sind. Hierdurch kann die Reibungsfläche zwischen Bremselement und Spindel deutlich erhöht werden. Besonders vorteilhaft ist es, wenn der Innengewindeabschnitt bzgl. des Spindelgewindes derart ausgelegt ist, daß es zu einer Keilwirkung der ineinandergreifenden Gewinde kommt. Hierzu können die Flankenwinkel des Bremselement-Innengewindes beispielsweise etwas größer sein als die Flankenwinkel des vorzugsweise als Trapezgewinde ausgebildeten Spindelgewindes.

Alternativ oder zusätzlich ist es auch möglich, daß Bremselemente nach radial außen bewegbar und zum Bremseingriff mit einer außenliegenden Brems-Gegenfläche, insbesondere einer Innenfläche eines die Sicherheitsmutter und die Arbeitsmutter umgebenden Bremsengehäuses ausgebildet sind. Die hierdurch bewirkte Abbremsung der Sicherheitseinrichtung wirkt auf die Spindel zurück und bremst diese ab. Dies läßt sich ohne besonderen Aufwand beispielsweise dadurch erreichen, daß ein Gehäuse des Gewindetriebes als Bremsengehäuses genutzt wird, indem sich radial nach außen bewegte Bremselemente der sich relativ zum Gehäuse axial bewegenden Sicherheitseinrichtung an der Innenseite des Gehäuses abstützen.

Bei Ausführungsformen mit außenliegender Brems-Gegenfläche ist es konstruktiv besonders einfach möglich, eine Bremseinrichtung zu schaffen, die eine von der axialen Stellung der Sicherheitseinrichtung auf der Spindel abhängige Bremswirkung hat, wobei beispielsweise in einem axialen Abschnitt überhaupt keine Bremswirkung auftreten kann und diese erst einsetzen kann, wenn die Sicherheitseinrichtung den Bereich eines Bremsabschnittes erreicht. Beispielsweise kann das Bremsengehäuse in mindestens einem vorgegebenen, gegebenenfalls einstellbaren Axialabschnitt einen nur einen Bruchteil der Länge des Gewindetriebes einnehmenden Bremsabschnitt zum Bremseingriff für die Sicherheitseinrichtung aufweisen. Ein derartiger Bremsabschnitt, der sich beispielsweise über weniger als die Hälfte oder ein Viertel, insbesondere zwischen 5 % und 20 % der Gesamtlänge des Gewindetriebes erstrecken kann, kann sich insbesondere an einem Ende des Gewindetriebes, vorzugsweise an dem unteren Ende eines Spindelhubtriebes befinden. Dadurch kann erreicht werden, daß die Arbeitsmutter auch bei beginnender Radialbewegung, insbesondere Spreizung der Bremselemente in einem Bereich ohne Bremsabschnitt noch ungehemmt laufen kann, während im Bereich des Bremsabschnittes bereits ein Bremseingriff erfolgt, der ggf. bis zur vollständigen Stillsetzung der Arbeitsmutter führen kann. Somit kann bei einer Hebeeinrichtung beispielsweise die Last noch abgesenkt werden, ohne daß es möglich ist, eine Last mit der (defekten) Arbeitsmutter noch anzuheben. Alternativ oder zusätzlich zu einem Bremsabschnitt kann auch mindestens ein ggf. federbelastetes Formschlußelement z.B. nach Art einer Rastnase mit Anlaufschräge vorgesehen sein, daß von einem nach außen gespreizten Bremselement bei Absenken der Last verdrängt werden kann, aber in Gegenrichtung eine formschlüssige Sperre bildet, so daß ein Wiederanfahren sicher verhindert wird.

Alternativ oder zusätzlich zu den beschriebenen Bremselementen kann die Bremseinrichtung mindestens ein, vorzugsweise zwischen Arbeitsmutter und Sicherheitsmutter angeordnetes, Quetschelement aufweisen, das durch axiale Relativverschiebung der Arbeitsmutter in Richtung auf die Sicherheitsmutter unter radialer Ausdehnung axial zusammendrückbar ist. Bei einem Quetschelement wirken die radialen Innen- bzw. Außenabschnitte des Quetschelementes als Bremselemente. Beispielsweise kann der zur Durchführung der Spindel vorgesehene Innendurchmesser der Sicherheitseinrichtung durch ein Quetschelement abschnittsweise derart verengt werden, daß sich die gewünschte Bremswirkung einstellt und/oder das im Normalbetrieb in einem Abstand zu einer Innenseite eines Bremsgehäuses vorbeilaufende Quetschelement wird beim Zusammendrücken mit seinem Außenabschnitt an das Bremselement angedrückt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte Ausführungen darstellen können. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen dargestellt und werden im folgenden näher erläutert. In den Zeichnungen zeigen:
- Fig. 1: eine teilweise geschnittene Seitenansicht einer Ausführungsform einer erfindungsgemäßen Sicherheitseinrichtung mit obenliegender Arbeitsmutter und untenliegender Sicherheitsmutter,
- Fig. 2: eine Draufsicht auf die der Sicherheitsmutter zugewandte Unterseite der Arbeitsmutter in Fig. 1,
- Fig. 3: eine Draufsicht auf die der Arbeitsmutter zugewandte Oberseite der Sicherheitsmutter in Fig. 1,
- Fig. 4: eine Draufsicht auf die einer Sicherheitsmutter zugewandte Unterseite der Arbeitsmutter einer anderen Ausführungsform, und
- Fig. 5: eine Draufsicht auf die der Arbeitsmutter in Fig. 4 zugewandte Oberseite der entsprechenden Sicherheitsmutter.

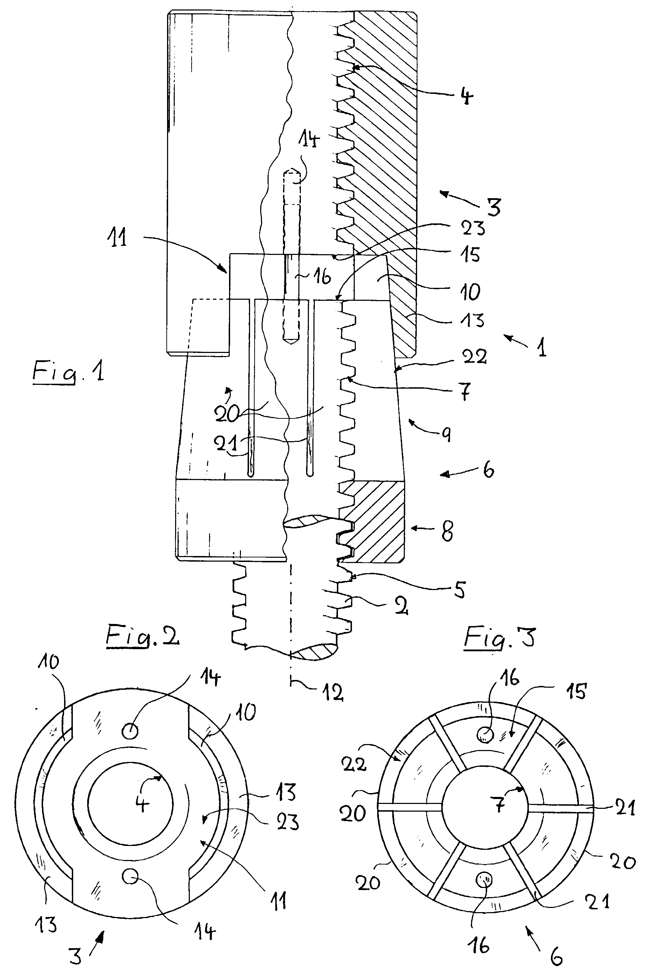

Die teilweise gebrochene Seitenansicht in Fig. 1 zeigt eine Ausführungsform einer erfindungsgemäßen Sicherheitseinrichtung 1, die auf einer vertikalen Spindel 2 eines Spindelhubgetriebes vertikal verschiebbar geführt ist. Der Drehantrieb der in einem nicht gezeigten, langgestreckten Gehäuse verlaufenden Spindel erfolgt über einen nicht gezeigten, mit wechselnden Drehrichtungen betreibbaren Elektromotor, der mit der Spindel über ein Getriebe verbunden ist. Auf der Spindel 2 ist eine zylindrische Arbeitsmutter 3 angeordnet, deren Trapez-Innengewinde 4 mit dem Trapez-Außengewinde 5 der Spindel derart zusammenwirkt, daß bei Drehung der Spindel 2 die verdrehsicher am Gehäuse geführte Arbeitsmutter 3 im wesentlichen axialspielfrei durch die Spindel linear verschoben wird. Die Arbeitsmutter 3 ist im Betrieb normalerweise mit einer zu verschiebenden, beispielsweise zu hebenden Last verbunden und mit entsprechender Axialkraft auf das Gewinde der Spindel gedrückt.

Unterhalb der Arbeitsmutter 3 ist auf der Spindel 2 eine Sicherheitsmutter 6 angeordnet, deren Innengewinde 7 ebenfalls in das Gewinde 5 der Spindel 2 eingreift. Die Sicherheitsmutter hat einen im Beispiel zylindrischen Unterabschnitt 8 und einen sich zur Arbeitsmutter hin in einem Konuswinkel von ca. 5° verjüngenden Oberabschnitt 9, der in eine teilweise durch Konusabschnittflächen 10 begrenzte untere Einstecköffnung 11 der Arbeitsmutter hineinragt. Die einander diametral zur Spindelachse 12 gegenüberliegenden, in Draufsicht kreissegmentartigen Konusabschnittsflächen 10 haben einen dem Konuswinkel des Oberabschnittes 9 entsprechenden Konuswinkel von ca. 5° zur Spindelachse. Sie bilden die radialen inneren Begrenzungen von zwei einander diametral gegenüberliegenden, kreissegmentförmigen Wandabschnitten 13 der Arbeitsmutter. Symmetrisch zwischen den Wandabschnitten 13 liegen zwei diametral einander gegenüberliegende, axiale Sacklöcher 14 mit zylindrischem Querschnitt, in die zwei korrespondierende, aus der Oberseite 15 der Sicherheitsmutter axial herausragende Axialführungsstifte 16 derart im wesentlichen spielfrei eingreifen, daß die Sicherheitsmutter 6 relativ zur Arbeitsmutter 3 verdrehgesichert ist. Eine axiale Relativbewegung ist dagegen möglich, da die Stifte in der gezeigten Normalbetriebsstellung nicht zum Boden der Sacklochbohrungen reichen.

Die Sicherheitsmutter 6 ist einstückig aus einem druckfesten, federelastischen Material gefertigt, beispielsweise einem geeignet federnden Metall, wie Stahl, oder aus Kunststoff. Sie hat in ihrem Oberabschnitt 9 sechs symmetrisch um den Umfang der Sicherheitsmutter verteilte, einander paarweise diametral gegenüberliegende, in Draufsicht (Fig. 3) ringabschnittförmige Bremszungen 20, die durch axial verlaufende Längsschlitze 21 in Umfangsrichtung voneinander getrennt sind. Die schmalen Längsschlitze 21 verlaufen paarweise fluchtend in radialer Richtung und gehen von der Oberseite 15 der Sicherheitsmutter bis zum Bereich des zylindrischen Abschnittes 8 durch, so daß der zylindrische Abschnitt den Zusammenhalt der radial elastisch verbiegbaren Bremszungen 20 gewährleistet. In Fig. 1 ist zu erkennen, daß jede der Zungen einen der Spindel 2 zugewandten Innengewindeabschnitt 7 und eine konusabschnittförmige radiale Außenfläche 22 hat, wobei die radialen Außenflächen 22 im unbelasteten Zustand der Sicherheitsmutter auf einer gemeinsamen Kegelfläche liegen. Der Durchmesser des Innengewindeabschnitts 7 erweitert sich zum der Lastmutter zugewandten, freien Ende der Bremszungen konisch um ca. 0,5 Grad, wobei dieser Öffnungswinkel toleranzabhängig gewährt werden kann und in der Regel weniger als 1 Grad und mehr als 0,1 Grad betragen kann.

Die Arbeitsmutter 3 und die Sicherheitsmutter 6 bilden eine sehr einfach aus im wesentlichen zwei zusammenwirkenden Baugruppen aufgebaute mechanische Bremseinrichtung, die weder gesonderte Hebel oder sonstige Betätigungsglieder, noch irgendwelche Wälzlager o.dgl. benötigt und die ausschließlich durch axiale Relativbewegung der beiden Muttern 3, 6 aufeinander zu betätigt wird. Sie kann nach folgendem Verfahren arbeiten. Im Normalbetrieb, d.h. bei im wesentlichen vollständig intakter Arbeitsmutter und ebenso intakter Spindel, nimmt die Arbeitsmutter die gesamte bei der Verschiebung einer Last auftretende Kraft auf, wobei die Gewinde 4, 5 mit einer gewissen, nicht zu großen Gleitreibung aneinander ableiten. Diese kann durch ggf. zugefügtes Schmiermittel herabgesetzt sein. Im Normalbetrieb nehmen die Muttern 3, 6 der Sicherheitseinrichtung die in Fig. 1 gezeigte Normalstellung ein, bei der sich die Sicherheitsmutter im wesentlichen unbelastet mit der Arbeitsmutter als mitlaufende Referenz mitbewegt und ihr Innengewinde 7 praktisch keinem Verschleiß unterliegt. Die Sicherheitsmutter ist derart weit in die Einstecköffnung 11 der Arbeitsmutter eingeschoben, daß zwischen ihrer Oberseite 15 und der zwischen den Wandabschnitten 13 liegenden Unterseite 23 der Arbeitsmutter ein axialer Abstand von etwa der doppelten Gewindesteigung besteht. Die konischen Außenflächen 22 im Bereich der Bremszungen 20 liegen ohne wesentlichen Radialdruck flächig an Konusabschnittflächen 10 der Arbeitsmutter 3 an und das Innengewinde 7 der Sicherheitsmutter hat sowohl im Bereich des zylindrischen Abschnittes 8, als auch im Bereich der Bremszungen 20 des Oberabschnittes 9 einen im wesentlichen konstanten Durchmesser.

Im Normalbetrieb läuft die Arbeitsmutter 3 im wesentlichen axialspielfrei auf der Spindel entlang. Bei einem das Axialspiel vergrößerndem Gewindeverschleiß bei Arbeitsmutter und/oder Spindel verringert sich der Abstand zwischen Arbeitsmutter Sicherheitsmutter und es gerät die zunächst im wesentlichen unbelastete Sicherheitsmutter mehr und mehr unter Belastung und ihr Gewinde greift mit erhöhter Gleitreibung in das Gewinde der Spindel. Ein hierdurch auftretendes Drehmoment kann nicht zu einer Verdrehung der Sicherheitsmutter gegenüber der Arbeitsmutter führen, da durch die in die Löcher 14 eingreifenden Stifte 16 eine Verdrehsicherung gegeben ist. Jedoch geraten die Innengewinde 4 und 7 mehr und mehr außer Phase und die Arbeitsmutter schiebt sich unter Verringerung des Abstands zur Sicherheitsmutter in axialer Richtung auf die Sicherheitsmutter. Durch die als axiale Keilflächen wirkenden, axial aneinander abgleitenden Konusflächen 10 der Arbeitsmutter und 22 der Sicherheitsmutter wird diese axiale Relativbewegung in eine radiale Bewegung der freien Enden der Bremszungen 20 in Richtung auf die Spindel 5 umgewandelt. Im Bereich des Oberabschnittes 9 der Sicherheitsmutter findet eine am freien Ende am stärksten ausgeprägte Durchmesserverringerung des Innengewindes 7 der Sicherheitsmutter statt. Es entsteht ab einem durch die Geometrie der Muttern 3, 6 vorgebbaren Anfangsabstand ein radialsymmetrischer Klemmdruck der als Bremselemente wirkenden, mit den Konusflächen 10 zusammenwirkenden vier Bremszungen auf die Spindel, wobei die erzeugte Bremskraft kontinuierlich mit geringer werdender axialer Verssetzung zwischen Arbeismutter und Sicherheitsmutter zunimmt. Die auftretende Bremswirkung kann durch den keilartigen Eingriff der Trapezgewinde 5, 7 ineinander verstärkt werden. Durch die geringfügige konische Erweiterung des Durchmessers des (unbelasteten) Innengewindeabschnittes 7 zum freien Ende der Bremszungen wird mit Vorteil erreicht, daß bei der Schwenkung der Bremszungen nach innen das Innengewinde 7 im Bremszungenbereich über mehrere Gewindegänge bzw. über einen axial ausgedehnten Abschnitt in Bremseingriff mit der Spindel tritt, wodurch die Bremswirkung verstärkt wird.

Die gegen Verdrehung gesicherte Sicherheitsmutter greift also mit steigender radialer Klemmkraft an der Spindel an und erhöht dadurch den Laufwiderstand der Arbeitsmutter/Sicherheitsmutter-Kombination in weit größerem Ausmaß, als es allein durch die verschleißbedingt zunehmende Gleitreibung der Arbeitsmutter auf der Spindel der Fall wäre. Die Bremseinrichtung wirkt also als verschleißabhängig wirkende Verstärkungseinrichtung für den Laufwiderstand der Arbeitsmutter/Sicherheitsmutter-Kombination. Die kontinuierliche, ruckfreie Abbremsung wird sich als erhöhter Leistungsbedarf des Spindelantriebes bemerkbar machen und kann beispielsweise auf elektronischem Wege und/oder über einen Überhitzungssensor ein Signal bewirken, das das Auftreten von Verschleißproblemen im Bereich der Arbeitsmutter anzeigt und das ggf. zur Abschaltung der Anlage genutzt werden kann. Bei Spindelhubgetrieben zum Heben von Lasten kann ein Antrieb vorteilhaft derart gesteuert sein, daß bei Erreichen einer vorgebbaren Grenze der Leistungsaufnahme nur noch ein Absetzen der Last möglich ist, nicht aber ein erneutes Wiederanheben der Last mit der (beschädigten) Arbeitsmutter. Hierdurch ist hohe Betriebssicherheit erreichbar.

Bei einem plötzlich auftretenden Versagen der Arbeitsmutter/Spindel-Kombination, beispielsweise bei Gewindebruch in der Arbeitsmutter, kann die Sicherheitsmutter nach Art einer Fangmutter die volle Last aufnehmen, sich klemmend an der Spindel 2 festhalten und dadurch das Abstürzen einer Last verhindern. Der Bremsweg kann in diesem Fall sehr kurz sein.

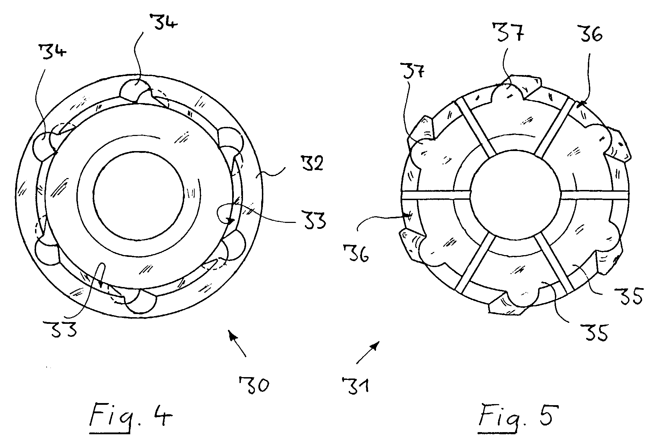

Eine andere Ausführungsform wird anhand der Figuren 4 und 5 erläutert, bei denen Figur 4 eine der Figur 2 entsprechende Unteransicht einer Arbeitsmutter 30 und Figur 5 eine der Figur 3 entsprechende axiale Draufsicht auf eine Sicherheitsmutter 31 zeigt. Die Arbeitsmutter und die Sicherheitsmutter können bezüglich Materialwahl und der Dimensionierung der Körper und/oder ihre Innengewinde den gleichen Aufbau wie entsprechende Elemente der in den Figuren 1 bis 3 gezeigten Ausführungsform haben. Im Unterschied zur dortigen Ausführungsform mit verdrehsicher mit der Arbeitsmutter gekoppelter Sicherheitsmutter ist bei dieser Ausführungsform vorgesehen, Arbeitsmutter und Sicherheitsmutter so zu koppeln, daß die Sicherheitsmutter relativ zur Arbeitsmutter winkelbegrenzt verdrehbar ist, und zwar derart, daß eine axiale Relativverschiebung von Sicherheitsmutter und Arbeitsmutter mit einer Relativverdrehung von maximal wenigen Graden einhergeht. Die Arbeitsmutter hat auf der der Sicherheitsmutter zugewandten Seite einen in Umfangsrichtung geschlossenen Wandabschnitt 32, an dessen Innenseite eine sich zur Sicherheitsmutter in einem Konuswinkel von ca. 5 Grad öffnende Konusfläche 33 ausgebildet ist. Im Wandabschnitt sind sechs regelmäßig um dessen Umfang verteilte Führungsnuten 34 vorgesehen, die sich nach radial innen öffnen, einen halbkreisförmigen Querschnitt haben und nach Art von Wendelabschnitten eines sehr steilen Gewindes in einem Winkel von ca. 5 Grad zur Axialrichtung ausgerichtet sind. Die dazu passende Sicherheitsmutter 31 hat einen Ring von sechs identischen, im Querschnitt kreissektorförmigen Bremszungen 35, deren radialen Außenseiten jeweils durch Abschnitte 36 einer Außenkonusfläche gebildet werden, der sich im Einsatz zur Arbeitsmutter hin in einem Konuswinkel von 5 Grad verjüngt. Jede der federelastischen Bremszungen hat etwa mittig auf ihrer radialen Außenseite eine im Querschnitt zumindest im freien Endbereich halbkreisförmige Führungswulst 37, die im wesentlichen spielfrei, jedoch ohne Pressung in eine zugeordnete Führungsnut 34 einführbar ist. Die Führungswülste sind in einem dem Schrägungswinkel der Führungsnuten 34 entsprechenden Winkel gegenüber der Axialrichtung angeschrägt und zum feststehenden Ende der Bremszungen 35 hin radial außen derart abgeflacht, daß der Durchmesser der Sicherheitsmutter im Bereich des abgeflachten, unteren Endes der Führungswülste im wesentlichen dem Außendurchmesser der Lastmutter 30 entspricht.

Durch den Wegfall der Führungsstifte 16 hat diese Ausführungsform weniger Bauteile als die Ausführungsform gemäß Figuren 1 bis 3. Die gegenseitige Führung der zusammenwirkenden Muttern 30, 31 wird durch die in den Schrägnuten 34 geführten Schrägwülste 37 gewährleistet, die jeweils einstückig mit der zugeordneten Bremszunge ausgebildet sind. Der Wegfall der Führungsstifte erleichtert auch die Montage der Sicherheitseinrichtung, da keine Stifte in zugeordnete Führungslöcher eingeführt werden müssen. Zudem wird eine bessere Führung dadurch erreicht, daß die Führung an sechs regelmäßig um den Umfang verteilten Führungen gleichzeitig erfolgt und die Führungen im Vergleich zu den Stiftführungen relativ große Führungsflächen haben. Wenn eine verdrehgesicherte Führung von Arbeitsmutter und Sicherheitsmutter aneinander gewünscht ist, können die Nuten 34 bzw. Führungswülste 37 auch ohne Schrägungswinkel parallel zur Axialrichtung ausgerichtet sein. Weiterhin ist es möglich, Führungen so auszubilden, daß die Sicherheitsmutter Führungsnuten aufweist, in die Vorsprünge der Arbeitsmutter eingreifen.

Im Betrieb der durch die Muttern 30, 31 gebildeten, zweiteiligen Sicherheitseinrichtung bewirkt die durch die Führungen 34, 37 gebildete Kopplung der Muttern bei axialem Aufschieben der Lastmutter auf die darunterliegende Sicherheitsmutter, daß diese sich relativ zur Lastmutter geringfügig dreht, während die Konusflächen 33, 36 aneinander abgleiten. Die Drehung unterstützt eine ruckfreie Relativbewegung, da einem Aneinanderhaften der unter Druck aufeinandergepreßten Konusflächen entgegengewirkt werden kann. Vorteilhaft ist weiterhin, daß die in Umfangsrichtung geschlossene, die Konusfläche 33 bildende Wandung 32 sich selbst gegen Aufspreizen stabilisieren kann. Weiterhin sind im Gegensatz zur Ausführung nach Figuren 1 bis 3 alle sechs Bremselemente 35 betätigbar, so daß ein besonders wirkungsvoller, großflächiger Bremseingriff zwischen Sicherheitsmutter und Spindel erreichbar ist. Wie bei der Ausführungsform nach den Figuren 1 bis 3 kann auch bei der Ausführungsform nach Figuren 4 und 5 das Innengewinde der Sicherheitsmutter 31 derart ausgelegt sein, daß sich bei zunehmender Belastung des Gewindeeingriffs von Sicherheitsmutter und Spindel eine Selbsthemmung ergibt, die einen zusätzlichen Beitrag zur Verstärkung der Bremswirkung bringt.

Die Erfindung wurde beispielhaft an aus wenigen Teilen einfach aufgebauten, kostengünstigen Sicherheitseinrichtungen erläutert, bei denen ein direkter Gewindeeingriff zwischen Arbeitsmutter und Spindel erfolgt. Die Erfindung ist auch bei Gewindetrieben einsetzbar, bei denen die Arbeitsmutter durch eine Kugelgewindeeinheit gebildet ist.

## Patentansprüche

1. Sicherheitseinrichtung für einen linearen Gewindetrieb, insbesondere ein Spindelhubgetriebe, mit einer Arbeitsmutter, die zum Zusammenwirken mit einer Spindel des Gewindetriebs ausgebildet ist, und mit mindestens einer mit der Arbeitsmutter zusammenwirkenden Sicherheitsmutter, die relativ zur Arbeitsmutter beweglich ist, dadurch gekennzeichnet, daß die Arbeitsmutter (3; 30) und die Sicherheitsmutter (6; 31) derart gekoppelt sind, daß sie eine durch die Relativbewegung von Arbeitsmutter und Sicherheitsmutter betätigbare, mechanische Bremseinrichtung für die Spindel (2) bilden.

2. Sicherheitseinrichtung nach Anspruch 1, dadurch gekennzeichnet, daß die Bremseinrichtung für das Zusammenwirken mit einer Kontrolleinrichtung für den Wirkungsgrad des Gewindetriebes ausgelegt ist, insbesondere mit einer Überlastsicherung eines Antriebsmotors für die Spindel, wobei vorzugsweise eine Steuerung eines Spindelhubgetriebes derart ausgelegt ist, daß bei Erreichen einer Leistungsaufnahmegrenze eines Antriebes nur noch ein Absetzen einer Last möglich ist und ein Wiederanfahren verhindert wird.

3. Sicherheitseinrichtung nach Anspruch 1 oder 2, dadurch gekennzeichnet, daß die Bremseinrichtung als Radial-Bremseinrichtung ausgebildet ist, die vorzugsweise zur Erzeugung eines radialsymmetrischen Bremseingriffs ausgelegt ist und/oder daß die Bremseinrichtung als Klemmeinrichtung ausgebildet ist, vorzugsweise mit radialsymmetrischem Klemmdruck.

4. Sicherheitseinrichtung nach einem der vorhergehenden Ansprüche, dadurch gekennzeichnet, daß die Bremseinrichtung in einem Abstandsbereich eine mit abnehmenden Abstand zwischen Arbeitsmutter (3; 30) und Sicherheitsmutter (6; 31) kontinuierlich zunehmende Bremswirkung hat.

5. Sicherheitseinrichtung nach einem der vorhergehenden Ansprüche, dadurch gekennzeichnet, daß die Sicherheitseinrichtung, insbesondere die Sicherheitsmutter (6; 31), mehrere um den Umfang der Sicherheitseinrichtung, vorzugsweise symmetrisch, verteilte, durch die vorzugsweise axiale Relativbewegung von Arbeitsmutter (3; 30) und Sicherheitsmutter (6; 31) radial bewegbare Bremselemente (20; 35) aufweist, wobei vorzugsweise die Bremselemente (20; 31) einstückig mit der Sicherheitsmutter (6) ausgebildet sind, und insbesondere durch axiale Bremszungen (20; 31) der Sicherheitsmutter gebildet sind.

6. Sicherheitseinrichtung nach einem der vorhergehenden Ansprüche, dadurch gekennzeichnet, daß der Innendurchmesser der Sicherheitsmutter (6; 31) und/oder der Außendurchmesser der Sicherheitsmutter zumindest in einem Axialabschnitt (9), vorzugsweise kontinuierlich, veränderbar ist.

7. Sicherheitseinrichtung nach einem der vorhergehenden Ansprüche, dadurch gekennzeichnet, daß die Sicherheitsmutter (6; 31) relativ zur Arbeitsmutter (3; 30) axial verschiebbar ist.

8. Sicherheitseinrichtung nach einem der vorhergehenden Ansprüche, dadurch gekennzeichnet, daß die Sicherheitsmutter (6) verdrehgesichert geführt, vorzugsweise drehfest mit der Arbeitsmutter (3) gekoppelt ist.

9. Sicherheitseinrichtung nach einem der Ansprüche 1 bis 7, dadurch gekennzeichnet, daß die Sicherheitsmutter (31) relativ zu der Arbeitsmutter (30), vorzugsweise winkelbegrenzt, verdrehbar und derart mit dieser gekoppelt ist, daß die axiale Relativverschiebung mit einer relativen Verdrehung einhergeht.

10. Sicherheitseinrichtung nach einem der vorhergehenden Ansprüche, dadurch gekennzeichnet, daß eine der Muttern eine axiale Keilfläche hat, die mit einer Gegenfläche der anderen Mutter bei axialer Relativverschiebung der Muttern eine Radialverschiebung mindestens eines Bremselementes bewirkt und/oder daß die Sicherheitsmutter (6; 31) einen der Arbeitsmutter (3; 30) zugewandten, sich zur Arbeitsmutter verjüngenden konischen Außenabschnitt (22; 36) hat, der mit einer, vorzugsweise konischen oder konusabhängigen, Innenfläche (10; 33) der Arbeitsmutter zusammenwirkt.

11. Sicherheitseinrichtung nach einem der vorhergehenden Ansprüche, dadurch gekennzeichent, daß die Bremselemente (20; 35) der Bremseinrichtung nach radial innen bewegbar und zum Bremseingriff mit der Spindel (2) ausgebildet sind, wobei vorzugsweise ein Bremselement einen Innengewindeabschnitt (7) aufweist, dessen Gewindegänge in das Außengewinde (5) der Spindel, vorzugsweise keilartig, eindrückbar sind, wobei vorzugsweise der Innengewindeabschnitt (7) eines schwenkbaren Bremselementes sich zu einem freien, nach radial innen bewegbaren Ende des Bremselementes derart erweitert, daß der Innengewindeabschnitt bei nach innen geschwenktem Bremselement in einem axial langgesterckten Bereich in Bremseingriff mit dem Außengewinde (5) der Spindel steht.

12. Sicherheitseinrichtung nach einem der vorhergehenden Ansprüche, dadurch gekennzeichnet, daß die Bremseinrichtung nach radial außen bewegbare Bremselemente zum Bremseingriff mit einer außerhalb der Muttern liegenden Brems-Gegenfläche, vorzugsweise mit einer Innenfläche eines die Sicherheitsmutter und die Arbeitsmutter umgebenden Bremsgehäuses, ausgebildet ist.

13. Sicherheitseinrichtung nach einem der vorhergehenden Ansprüche, dadurch gekennzeichent, daß die Bremseinrichtung eine von der axialen Stellung der Sicherheitseinrichtung auf der Spindel abhängige Bremswirkung hat und/oder daß mindestens ein nur einen Bruchteil der Länge des Gewindetriebs einnehmender Bremsabschnitt zum Bremseingriff für die Sicherheitseinrichtung vorgesehen ist, wobei sich der Bremsabschnitt vorzugsweise an einem Ende, vorzugsweise dem unteren Ende, des Gewindetriebes befindet.

14. Sicherheitseinrichtung nach einem der vorhergehenden Ansprüche, dadurch gekennzeichnet, daß die Bremseinrichtung mindestens ein, vorzugsweise zwischen Arbeitsmutter und Sicherheitsmutter angeordnetes, Quetschelement aufweist, das durch axiale Relativverschiebung von Arbeitsmutter und Sicherheitsmutter unter radialer Ausdehnung axial zusammendrückbar ist.

15. Linearer Gewindetrieb, insbesondere Spindelhubgetriebe, mit einer Arbeitsmutter, die zum Zusammenwirken mit einer Spindel des Gewindetriebs ausgebildet ist, und mit mindestens einer mit der Arbeitsmutter zusammenwirkenden Sicherheitsmutter, die relativ zur Arbeitsmutter beweglich ist, dadurch gekennzeichnet, daß die Arbeitsmutter (3; 30) und die Sicherheitsmutter (6; 31) eine Sicherheitseinrichtung nach einem der Ansprüche 1 bis 14 bilden.
